# EUROPÄISCHE PATENTSCHRIFT

(11) **EP 0 988 171 B1**
(45) Veröffentlichungstag und Bekanntmachung des Hinweises auf die Patenterteilung: **14.03.2001**
(21) Anmeldenummer: 98936143.1
(22) Anmeldetag: 06.06.1998
(51) Int. Cl.: B60N 2/44

(54) **Beidseitig wirkender Verstellantrieb**
Two-side adjustment drive mechanism
Mécanisme de commande de réglage agissant sur deux côtés

(30) Priorität: 13.06.1997 DE 19725899
(43) Veröffentlichungstag der Anmeldung: 29.03.2000
(73) Patentinhaber: Brose Fahrzeugteile GmbH & Co. KG Coburg, 96450 Coburg (DE)
(72) Erfinder: SCHUMANN, Peter, D-96253 Untersiemau (DE); FORKEL, Michael, D-96450 Coburg (DE)
(74) Vertreter: Müller, Wolfram Hubertus, Dipl.-Phys.
(86) Internationale Anmeldenummer: DE9801596
(87) Internationale Veröffentlichungsnummer: WO9857819

(56) Entgegenhaltungen:
- EP-A- 0 754 589
- DE-A- 4 120 617
- DE-A- 19 527 912
- PATENT ABSTRACTS OF JAPAN vol. 017, no. 591 (C-1125), 28. Oktober 1993 & JP 05 176819 A (TOKYO SEAT KK), 20. Juli 1993

## Beschreibung

Die Erfindung betrifft einen beidseitig wirkenden Verstellantrieb nach dem Oberbegriff des Anspruchs 1. Ein derartiger Antrieb eignet sich insbesondere für die Verwendung in einer manuellen Höhen- oder Neigungsverstellungseinrichtung eines Fahrzeugsitzes.

Aus der DE 195 27 912 A1 ist ein gattungsmäßiger beidseitig wirkender Antrieb bekannt, bei dem der Antriebshebel auf einer Antriebsachse gelagert ist und schwenkbare Verriegelungelemente trägt, deren mit Verzahnungselementen versehene freie Enden mit der auf dem Umfang eines Antriebsrades angeordneten Verzahnung in Eingriff bringbar sind. Den schwenkbaren Verriegelungselementen ist eine Kulissenführung zugeordnet, die je nach Schwenkrichtung des Antriebshebels das jeweils unbelastete Verriegelungelement von der Verzahnung des Antriebsrades abhebt. Dabei sind beidseitig und außerhalb der Kulissenführung Federbereiche vorgesehen, die auf die Verriegelungselemente eine entgegen der Einrastrichtung der Verzahnung gerichtete Kraft ausüben, wodurch sogenannte Ratschengeräusche vermieden werden.

In einer Ausführungsform ist die auf dem Umfang des Antriebsrades angeordnete Verzahnung eine Innenverzahnung und sind die Verriegelungselemente auf einer Achse des Antriebshebels innerhalb des von der Innenverzahnung gebildeten Umfanges gelagert.

Nachteilig an den aus der DE 195 27 912 A1 bekannten Verstellantrieben ist zum einen eine relativ große Teilezahl. Insbesondere sind zwei unabhängige Verriegelungselemente für eine beidseitige Verstellung erforderlich. Damit verbunden ist ein entsprechend großer Bauraum des Verstellantriebs. Zum anderen ist eine relativ aufwendige Konstruktion erforderlich, um die Verriegelungselemente definiert zu führen und dabei ein Ratschen der Verzahnung der Verriegelungelemente an der Verzahnung des Antriebsrads bei Zurückführen des Antriebshebels in die Nullpunkt-Lage zu vermeiden.

Die JP-A-05176819 beschreibt einen Verstellmechanismus zur Einstellung der Neigung der Sitzlehne eines Fahrzeugsitzes, bei dem bei Betätigen eines Betätigungshebels eine Entriegelung erfolgt und daraufhin eine freie Verstellung der Sitzlehnenneigung vorgenommen werden kann. Bei Loslassen des Betätigungshebels erfolgt eine erneute Verriegelung. Zur Verriegelung sind zwei mit dem Betätigungshebel gekoppelte und drehbar auf einer Spindel gelagerte Verriegelungsteile mit Verzahnungsbereichen vorgesehen, die mit einer Gegenverzahnung in Eingriff bringbar sind und bei Betätigen bzw. Loslassen des Betätigungshebels außer bzw. in Eingriff mit der Gegenverzahnung gebracht werden.

Der Erfindung liegt die Aufgabe zu Grunde, einen beidseitig wirkenden Antrieb zur Erzeugung einer Drehbewegung zur Verfügung zu stellen, der mit einer geringen Anzahl von Einzelteilen auskommt, einfach zu montieren ist und sich durch einen kompakten Aufbau auszeichnet.

Diese Aufgabe wird erfindungsgemäß durch einen beidseitig wirkenden Antrieb mit den Merkmalen des Anspruchs 1 gelöst. Bevorzugte und vorteilhafte Ausgestaltungen der Erfindung sind in den Unteransprüchen angegeben.

Die erfindungsgemäße Lösung sieht vor, als Verriegelungsmittel ein einteiliges Kippelement zu verwenden, das zwischen zwei Endpositionen hin und her kippbar ist und in jeder Endposition entsprechend der vorliegenden Antriebsrichtung ein Drehmoment auf das Antriebsrad überträgt. Hierdurch wird der Einsatz zweier gesonderter Verriegelungselemente überflüssig und der erforderliche Bauraum minimiert.

Gleichzeitig wird im Vergleich zu einem Einsatz zweier gesonderter Verriegelungselemente der Montageaufwand verringert, da ein Vernieten von Verriegelungselementen am Antriebshebel entfällt.

Eine Verkippung des Kippelements kann dabei aufgrund der am Kippelement angreifenden Kräfte immer nur bei einer Schwenkbewegung des Antriebshebels aus der Nullpunkt-Lage heraus erfolgen. Bei einer Rückstellbewegung des Antriebshebels gerät das Kippelement automatisch außer Eingriff mit der Verzahnung des Antriebsrads, so daß sichergestellt ist, daß das Antriebsrad während einer Rückstellbewegung nicht mitgenommen wird.

In einer bevorzugten Ausgestaltung der Erfindung ist das Kippelement kippbar an zwei radial beabstandeten Lagerpunkten des Antriebs gelagert. Die beiden Lagerpunkte sind an zwei Antriebsteilen ausgebildet, die unabhängig voneinander um die Antriebsachse verschwenkbar sind. Dabei ist der eine Lagerpunkt in einer bevorzugten Ausbildung am Antriebshebel ausgebildet und der andere Lagerpunkt an einer Halteplatte, die sich abtriebsseitig an den Antriebshebel anschließt, wobei der Antriebshebel und die Halteplatte über das Kippelement miteinander gekoppelt sind.

Aufgrund des radialen Abstandes der beiden Lagerpunkte wird bei einer Betätigung des Antriebshebels aus der Nullpunkt-lage heraus ein Drehmoment auf das Kippelement ausgeübt, so daß dieses in Abhängigkeit von der Antriebsrichtung in die eine oder andere Endposition verkippt und mit der Verzahnung des Antriebsrades in Eingriff gerät. Eine Kippbewegung des Kippelementes wird dabei dadurch verursacht, daß bei einer Schwenkbewegung des Antriebshebels aus der Nullpunkt-lage heraus die am Antriebshebel ausgebildete Lagerstelle ebenfalls verschwenkt wird, während die an der Halteplatte ausgebildete Lagerstelle zunächst in ihrer Position verharrt und dabei ein Gegenmoment erzeugt.

Die Halteplatte verharrt dabei aufgrund ihrer trägen Masse sowie aufgrund von Reibungskräften in ihrer Ausgangs- bzw. Nullstellung, wodurch das Kippelement verkippt. Nachdem das Kippelement in die entsprechende Endposition gekippt und in Eingriff mit der Verzahnung des Antriebsrades gelangt ist, erfolgt dann aufgrund der Kopplung von Antriebshebel und Halteplatte auch eine Drehbewegung der Halteplatte.

In einer vorteilhaften Ausgestaltung der Erfindung stellt das Kippelement eine Wippe dar, die zwei auf einem Kreisumfang angeordnete, beabstandete Verzahnungsbereiche aufweist. Dabei steht in jeder Endposition der Wippe einer der Verzahnungsbereiche mit der Verzahnung des Antriebsrades in Eingriff. Die Wippe ist bevorzugt achsensymmetrisch aufgebaut, wobei die beiden Lagerpunkte der Wippe auf der Symmetrieachse liegen. Hierdurch wird gewährleistet, daß der Antrieb in beiden Antriebsrichtungen in gleicher Weise funktioniert.

Alternativ ist die Wippe asymmetrisch aufgebaut, so daß in den beiden Antriebsrichtungen ein unterschiedliches Spiel zwischen Wippe und Antriebsrad und unterschiedliche Hubwinkel vorliegen. Diese Ausgestaltung ist dann sinnvoll, wenn je nach Antriebsrichtung ein unterschiedlicher Hub verwirklicht werden soll.

In einer Ausbildung der Erfindung ist vorgesehen, daß die Verzahnungsbereiche der Wippe sowie die Verzahnung des Antriebsrades nicht eigentlich als Verzahnung, sondern eben ausgebildet sind. Dabei weisen die jeweiligen Oberflächen jedoch einen hohen Reibungskoeffizienten auf, so daß eine Verriegelung der Wippe mit dem Antriebsrad über einen Reibschluß erfolgt. Der Vorteil dieser Ausgestaltung liegt darin, daß an Wippe und Antriebsrad keine Verzahnungen ausgebildet werden müssen.

In einer ersten Variante der Erfindung sind Mittel vorgesehen, die bei einer Schwenkbewegung des Antriebshebels aus der Nullpunktlage heraus einer korrespondierenden Drehung der Halteplatte aus deren Nullstellung entgegenwirken. Ein derartiges Verharrungs- oder Bremsverhalten der Halteplatte ist von Vorteil, da dadurch das erforderliche Gegenmoment am Kippelement bzw. der Wippe zum sicheren Einrasten der Verzahnungsbereiche des Kippelementes in die Verzahnung des Antriebsrades zur Verfügung gestellt wird. Es sind verschiedene Ausführungsformen vorgesehen, wie ein derartiges Verhalten der Halteplatte erreicht wird.

In einem ersten Ausführungsbeispiel ist eine Drehfeder vorgesehen, die an der Halteplatte fixiert ist. Bei einer Drehung der Halteplatte wird die Drehfeder gespannt, so daß auf die Halteplatte ein rückstellendes Moment in Richtung der Nullstellung wirkt. Die Drehfeder versucht also, die Halteplatte stets in der Nullstellung zu halten. Bei einer Auslenkung des Antriebshebels und einem aufgrund der Kopplung Antriebshebel-Kippelement-Halteplatte auf die Halteplatte ausgeübten Drehmoment erzeugt die Drehfeder aufgrund ihres in entgegengesetzter Richtung auf die Halteplatte wirkenden Drehmoments ein Gegenmoment, das zu einem sicheren Kippen und Einrasten des Kippelementes führt.

In einem zweiten Ausführungsbeispiel wird ein Gegenmoment nur in der Nullstellung der Halteplatte erzeugt. Hierzu ist ein Rastelement vorgesehen, in das die Halteplatte in der Nullstellung lösbar einrastet. Bei dem Rastelement handelt es sich bevorzugt um eine Rastfeder, die eine axiale Kraft auf die Halteplatte ausübt und durch ein damit verbundenes Reibungs- bzw. Bremsmoment einem Herausdrehen der Halteplatte aus der Nullstellung entgegenwirkt. Nachdem die Halteplatte nach Verkippen des Kippelementes aufgrund der Kopplung mit dem Antriebshebel aus der Nullstellung herausgedreht ist, gleitet die Rastfeder dann über das Kippelement weg. In einer anderen Ausführungsform ist das Rastelement als Rastkugel ausgebildet, die in der Nullstellung etwa in eine Eindellung der Halteplatte einrastet.

Durch den Einsatz von Mitteln, die einer Drehung der Halteplatte aus der Nullstellung entgegenwirken, verringert sich durch ein sicheres und sofortiges Verkippen des Kippelementes das Spiel und damit der Leerlauf des Antriebshebels bei Beginn einer Schwenkbewegung.

In einer zweiten Variante der Erfindung ist dem Kippelement eine Kulissenführung zugeordnet, die das Kippelement während einer Betätigung des Antriebshebels auf einer definierten Bahn führt und ein Rückstellen des Kippelementes bei einem Rückführen des Antriebshebels in die Nullpunktlage sicherstellt. Hierzu weist das Kippelement zwei symmetrisch angeordnete Nocken oder Bolzen auf, die in der Kulissenführung geführt werden. Die Kulisse ist dabei bevorzugt im Abdeckblech des Antriebs ausgebildet, das sich antriebsseitig an den Antriebshebel anschließt. Alternativ ist die Kulissenführung am Antriebshebel selbst ausgebildet.

Durch Führen des Kippelements in einer Kulissenführung wird sicher verhindert, daß die Verzahnungen von Kippelement und Antriebsrad während der Rückstellbewegung aufeinandergleiten und dadurch ein Ratschengeräusch erzeugt wird. Der Verstellantrieb kann dadurch sehr geräuscharm ausgebildet werden.

Der erfindungsgemäße Antrieb weist eine Rückholfeder zum Rückholen des Antriebshebels in seine Nullpunktlage nach einem Verschwenkvorgang auf. Die Rückholfeder ist zum einen mit einem gehäusefesten Gehäuseanschlag und zum anderen mit dem Antriebshebel bzw. einem mit diesem verbundenen Anschlag gekoppelt. Aus der eingangs genannten DE 195 27 912 A1 ist es bekannt, die Rückholfeder auf dem Bremsgehäuse einer Bremsvorrichtung des Antriebs anzuordnen. Die Bremsvorrichtung steht dabei mit der Antriebswelle derart in Verbindung, daß eine abtriebsseitige Drehmomentübertragung gesperrt, eine antriebsseitige Drehmomentübertragung dagegen möglich ist. Der Aufbau und die Funktion derartiger Bremsvorrichtungen sind im Stand der Technik bekannt, beispielsweise aus der DE 41 20 617 A1.

Alternativ zu der Anordnung der Rückholfeder auf einem Bremsgehäuse ist die Rückholfeder in den freien Innenraum des Antriebsrades verlegt. Durch eine Integration der Rückstellfeder in den sich unmittelbar an den Antriebshebel anschließenden Bauraum wird mit Vorteil die Komplexität des Antriebs weiter erhöht und weiterer Platz gespart. Nachwievor ist die Rückstellfeder dabei mit einem Federende an einem gehäusefesten Anschlag befestigt, um bei einem Auslenken des Antriebshebels eine Verspannung zu erfahren.

Der erfindungsgemäße Antrieb weist ein Abtriebselement, etwa ein Ritzel auf, auf das die durch den Antrieb erzeugte Drehbewegung übertragen wird. Zur Übertragung der Drehbewegung auf das Abtriebselement sind zwei Alternativen vorgesehen. In einer ersten Alternative ist das Antriebsrad starr mit einer Antriebswelle verbunden, deren Achse mit der Schwenkachse des Antriebshebels zusammenfällt. Mit der Antriebswelle ist ebenfalls drehfest das Abtriebselement verbunden, so daß die vom Antriebshebel auf das Antriebsrad übertragene Drehbewegung unmittelbar auf die Antriebswelle und von dieser auf das Abtriebselement übertragen wird.

Alternativ bildet das Antriebsrad selbst das anzutreibende Element aus. Eine eigentliche Welle ist bei dieser Ausführungsform nicht vorgesehen. Vielmehr lagern Antriebshebel, Halteplatte, Antriebsrad und die weiteren Elemente des Antriebs auf einem Stufenbolzen, ohne drehfest mit diesem verbunden zu sein. Das Antriebsrad ist dabei mit dem Abtriebselement gekoppelt, so daß eine Drehbewegung des Antriebsrades ebenfalls auf das Abtriebselement übertragen wird.

Es wird darauf hingewiesen, daß die Verzahnung des Antriebsrads mit Vorteil als Innenverzahnung ausgebildet ist. Dies ermöglicht die Anordnung des Kippelementes und der Halteplatte im inneren Bauraum des Antriebsrades und führt zu einer sehr kompakten und platzsparenden Bauweise des Antriebes. Grundsätzlich liegt es jedoch auch im Rahmen der Erfindung, eine Außenverzahnung des Antriebsrades vorzusehen, wobei das Kippelement dann außerhalb des Antriebsrades kippbar gelagert ist und in eine Außenverzahnung eines Antriebsrades eingreift.

Die Erfindung wird nachfolgend unter Bezugnahme auf die Figuren der Zeichnung anhand mehrerer Ausführungsbeispiele näher erläutert. Es zeigen:
- Figur 1 -: eine Explosionsdarstellung einer ersten Ausführungsform eines erfindungsgemäßen Antriebs;
- Figur 2 -: eine Querschnittsansicht des Antriebs der Figur 1;
- Figur 3 -: eine Querschnittsansicht eines zweiten Ausführungsbeispiels eines erfindungsgemäßen Antriebs, bei dem die Halteplatte mit einer Drehfeder gekoppelt ist;
- Figur 4a -: eine Seitenansicht des Antriebs der Figur 3 ;
- Figur 4b -: die Ansicht der Figur 4a, wobei der Antriebshebel nicht dargestellt ist;
- Figur 5a -: eine Seitenansicht eines weiteren Ausführungsbeispiels eines erfindungsgemäßen Antriebs, bei dem eine Rastfeder ein definiertes Bremsmoment an der Halteplatte erzeugt;
- Figur 5b -: eine Querschnittsansicht des Antriebs der Figur 5a entlang der Linie A-A;
- Figuren 6a bis 6f -: den Bewegungsablauf des Kippelements eines weiteren erfindungsgemäßen Antriebs bei Verschwenken des Antriebshebels, wobei das Kippelement mittels kreisförmiger Nocken in einer Kulisse geführt wird;
- Figuren 7a bis 7f -: den Bewegungsablauf des Kippelements eines weiteren erfindungsgemäßen Antriebs bei Verschwenken des Antriebshebels, wobei der Antrieb dem Antrieb der Figuren 6a bis 6f bis auf den Umstand entspricht, daß die in der Kulisse geführten Nocken viereckig ausgebildet sind und
- Figur 8 -: einen Antrieb gemäß Figur 2, wobei am Antriebshebel zusätzlich eine federnde Rastlasche ausgebildet ist.

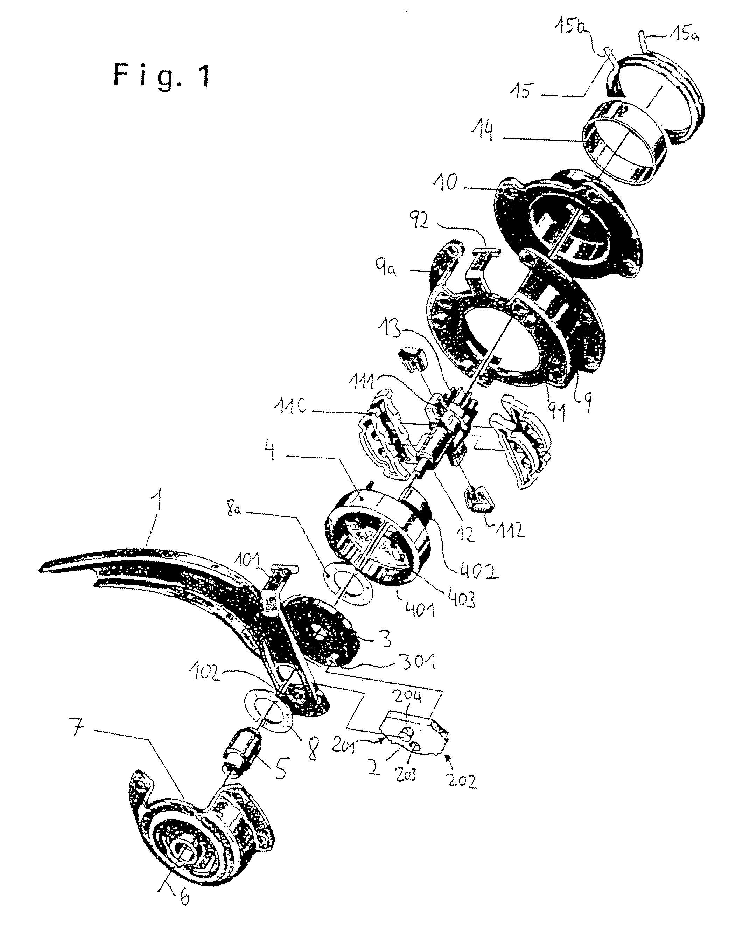

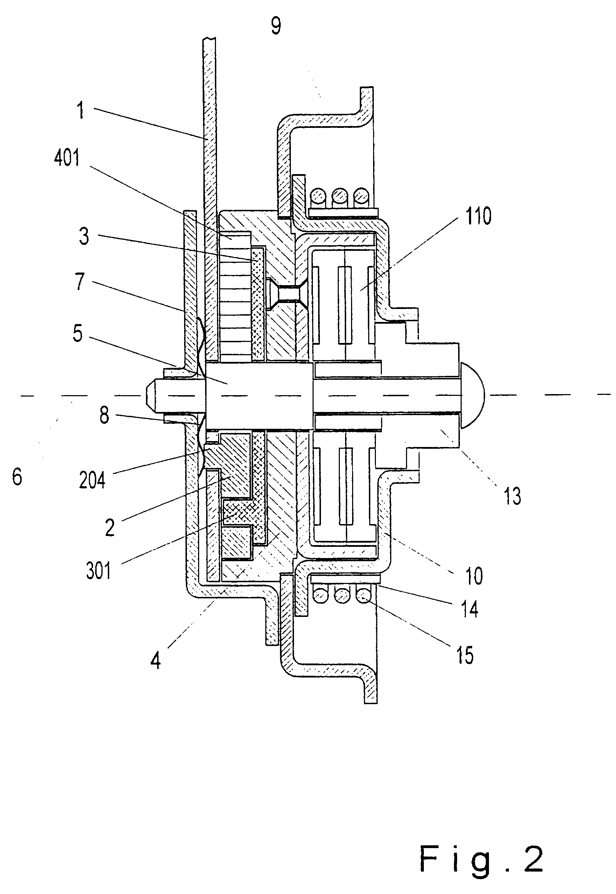

In den Figuren 1 und 2 ist der grundlegende Aufbau eines erfindungsgemäßen, beidseitig wirkenden Verstellantriebs dargestellt. Ein Antriebshebel 1, eine Wippe 2, eine Halteplatte 3 und ein Antriebsrad 4 mit einer Innenverzahnung 401 lagern auf einer Distanzhülse 5, die entlang einer Antriebsachse 6 angeordnet ist. Der Antriebshebel 1, die Wippe 2, die Halteplatte 3 und das Antriebsrad 4 werden durch ein Abdeckblech 7 abgedeckt, das ebenfalls auf der als Stufenbolzen ausgebildeten Distanzhülse 5 lagert.

Zwischen Abdeckblech 7 und Antriebshebel 1 ist eine als Wellscheibe ausgebildete Feder 8 vorgesehen, die eine axiale Kraft auf die einzelnen Antriebselemente ausübt und dafür sorgt, daß die Antriebselemente im wesentlichen ohne Spiel fest aneinanderliegen. Zwischen Halteplatte 3 und Antriebsrad 4 ist eine weitere Wellfeder 8a angeordnet, auf die jedoch optional verzichtet werden kann und die in Fig. 2 nicht dargestellt ist.

Abtriebsseitig schließen sich an das Antriebsrad 4 ein Befestigungsträger 9 und eine Bremsvorrichtung 11 an, die in einem Bremsgehäuse 10 angeordnet ist. Der Befestigungsträger 9 ist über Befestigungsflächen 9a mit einem trägerfesten Element, beispielsweise dem Seitenteil eines Kraftfahrzeugsitzes, befestigt. Des weiteren sind am Befestigungsträger 9 Hülsen 91 zur Befestigung des Abdeckblechs 7 vorgesehen.

Die in dem Bremsgehäuse 10 angeordnete Bremsvorrichtung 11 weist in aus der DE 41 20 617 A1 bekannter Weise Klemmelemente 110 auf, die mit Flügeln 111 eines auf der Antriebsachse 6 angeordneten Bolzens 12, Formfedern 112 sowie mit zylindermantelförmigen Klauen 401 und Montageöffnungen 403 des Antriebsrades 4 in Wirkverbindung stehen. Auf dem Bolzen 12 ist abtriebsseitig ein drehfest mit den Flügeln 111 verbundenes Abtriebsritzel 13 angeordnet, das in eine Getriebevorrichtung, etwa zur Höhen- oder Neigungsverstellung eines Fahrzeugsitzes, eingreift.

Die Bremsvorrichtung 11 funktioniert derart, daß bei Wirkung eines abtriebsseitigen Drehmoments auf das Ritzel 13 die Klemmelemente 110 an die Innenwand des Bremsgehäuses 10 geklemmt und eine Drehmomentübertragung dadurch gesperrt wird. Bei einer antriebsseitigen Drehmomentübertragung ist die Sperrwirkung dagegen aufgehoben. Die Bremsvorrichtung 11 verhindert somit, daß bei Auftreten äußerer Kräfte eine Verstellung des Antriebes erfolgt. Insbesondere stellt sie sicher, daß im Falle des Auftretens von Crashkräften eine Drehung des Ritzels 13 verhindert wird.

Auf dem äußeren Umfang des Bremsgehäuses 10 lagert auf einer Buchse 14 eine Rückholfeder 15, die zwei Federschenkel 15a, 15b aufweist, an denen zum einen eine gehäusefeste Gehäuselasche 92 des Befestigungsträgers 9 und zum anderen eine sich vom Antriebshebel 1 in Richtung der Rückholfeder 15 erstreckende Rückhollasche 101 des Antriebshebels 1 in Eingriff stehen. Die beiden Laschen 92, 101 sind dabei zwischen den beiden freien Enden 15a, 15b der Rückstellfeder 15 eingeklemmt.

Die Verwendung einer Buchse 14 zur Lagerung der Rückholfeder 15 ist optional und insbesondere bei Auftreten hoher Belastungen vorgesehen.

Die Wippe 2 weist zwei symmetrisch angeordnete, auf einem Kreisumfang liegende Verzahnungsbereiche 201, 202 auf, wobei je nach Antriebsrichtung einer der Verzahnungsbereiche 201, 202 mit der Innenverzahnung 401 des Antriebsrades 4 in Eingriff bringbar ist. Auf der Symmetrieachse der Wippe 2 sind zwei in bezug auf die Antriebsachse 6 radial beabstandete Lagerpunkte angeordnet, über die die Wippe 2 zum einen mit dem Antriebshebel 1 und zum anderen mit der Halteplatte 3 verbunden ist. Der Lagerpunkt zwischen Wippe 2 und Antriebshebel 1 wird dabei durch einen Stift oder Zapfen 204 verwirklicht, der in eine entsprechende Aussparung 102 des Antriebshebels 1 eingreift. In entsprechender Weise wird der Lagerpunkt zwischen Halteplatte 3 und Wippe 2 durch einen Stift oder Zapfen 301 der Halteplatte 3 ausgebildet, der in ein Loch 203 der Wippe 2 eingreift.

Die Wippe ist bevorzugt als Sinterteil ausgebildet, wobei der Stift 204 in das Sinterteil eingepreßt ist. Die Halteplatte 3 besteht dagegen bevorzugt aus Kunststoff, um das Gewicht des Antriebs gering zu halten. Der Stift 301 ist beispielsweise einstückig an die Halteplatte 3 angeformt. Alternativ besteht auch die Wippe aus Kunststoff.

Bei einer Schwenkbewegung des Antriebshebels 1 aus der Nullpunktstellung heraus wird der in dem Loch 102 des Antriebshebels 1 lagernde Stift 204 der Wippe 2 ebenfalls um die Antriebsachse 6 geschwenkt. Aufgrund von Reibungskräften zwischen der Halteplatte 3 und der Distanzhülse 5 sowie ggf. dem Antriebsrad 4 widersetzt sich die Halteplatte 3 zunächst einem Mitdrehen mit dem Antriebshebel 1. Der Stift 301 der Halteplatte 3 bildet dabei ein Gegenlager, so daß an der Wippe 2 ein Drehmoment entsteht, die Wippe 2 verkippt und je nach Antriebsrichtung einer der Verzahnungsbereiche 201, 202 der Wippe 2 in die Verzahnung 401 des Antriebsrades 4 eingreift.

Bei einem Schwenken des Antriebshebels 1 nach oben aus der Nullpunktlage heraus wird die Wippe 2 beispielsweise nach links verkippt, so daß der Verzahnungsbereich 201 mit der Verzahnung 401 des Antriebsrades 4 in Eingriff tritt. Auf diese Weise wird eine Drehbewegung des Antriebshebels 1 auf das Antriebsrad 4 übertragen.

Bei einem Rückschwenken des Antriebshebels 1 in die Nullpunktlage wird das an der Wippe 2 anliegende Drehmoment aufgehoben, so daß der in Eingriff befindliche Verzahnungsbereich 201, 202 der Wippe 2 außer Eingriff mit der Verzahnung 401 des Antriebsrades 4 gerät und Antriebshebel 1, Wippe 2 und Halteplatte 3 in die Nullpunktstellung zurückkehren, ohne daß diese Rückstellbewegung auf das Antriebsrad 4 übertragen würde.

Eine vom Antriebshebel 1 bewirkte Drehbewegung des Antriebsrades 4 wird über die Mitnahmeöffnungen 403 des Antriebsrades 4 und die drehfest mit dem Abtriebsritzel 13 verbundenen Flügel 111 der Bremsvorrichtung 11 auf das Abtriebsritzel 13 übertragen. Durch diese Art der Übertragung einer Drehbewegung auf das Abtriebsritzel 13 werden Antrieb und Bremsvorrichtung 11 entkoppelt.

In einer alternativen Ausführungsform (nicht dargestellt) ist vorgesehen, daß das Antriebsrad drehfest auf einer Antriebsachse angeordnet ist, so daß eine Drehbewegung des Antriebsrads auf die Antriebsachse übertragen wird. Das Abtriebsritzel ist in dieser Ausführungsform ebenfalls drehfest mit der Antriebswelle verbunden. Auch in dieser Ausführungsform ist eine Bremsvorrichtung mit Klemmelementen vorgesehen, die bei Anliegen eines abtriebsseitigen Drehmomentes am Abtriebsritzel gegen das Bremsgehäuse gepreßt werden und dadurch eine Drehung blockieren.

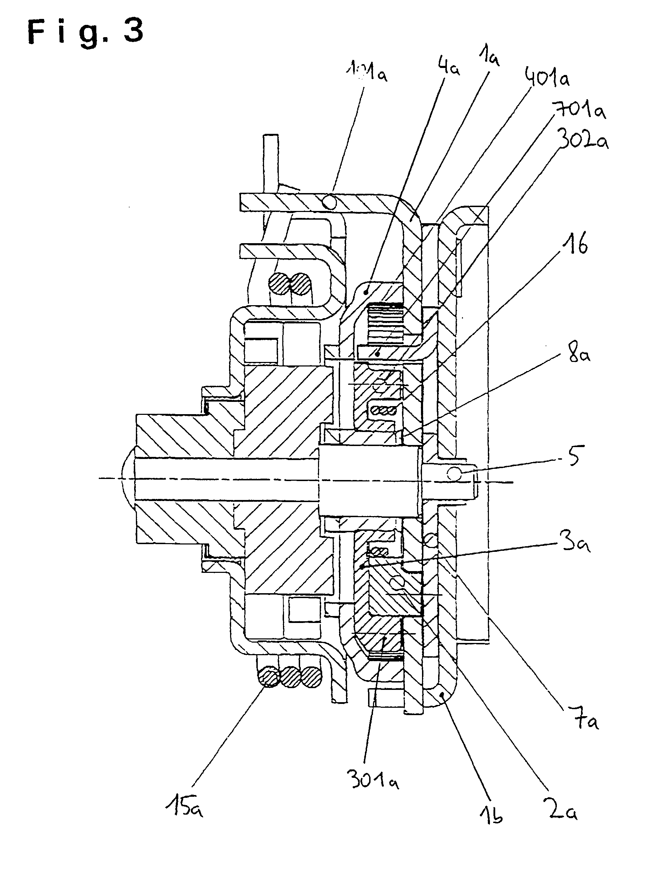

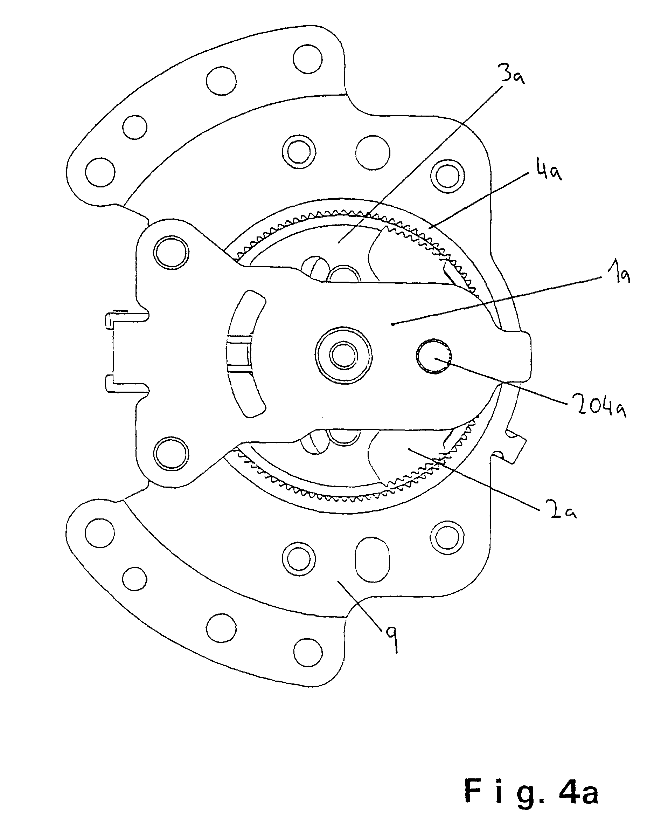

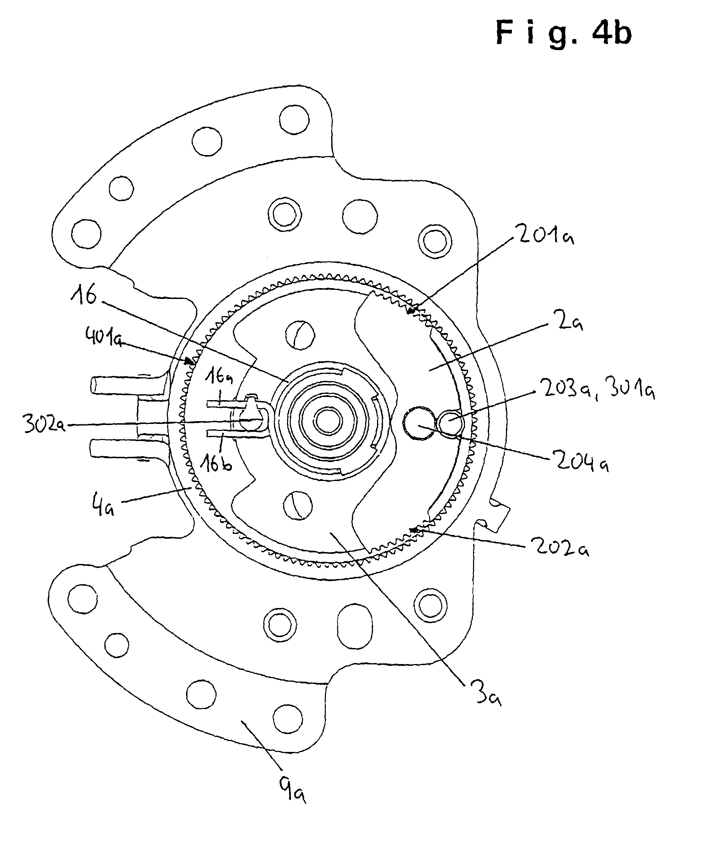

In den Figuren 3, 4a, 4b ist eine Weiterbildung der Erfindung dargestellt, in der eine Drehfeder 16 mit der Halteplatte verbunden ist, derart, daß bei einer Auslenkung der Halteplatte aus der Nullstellung ein rückstellendes Drehmoment auf die Halteplatte wirkt. Der Aufbau und die Funktionsweise des in den Figuren 3, 4a, 4b dargestellten beidseitig wirkenden Antriebs werden dabei nur insofern erläutert, wie sie sich von dem Aufbau und der Funktionsweise des Antriebs der Figuren 1 und 2 unterscheiden.

Wie insbesondere anhand der Fig. 4a, 4b zu erkennen, ist eine als Kippelement dienende Wippe 2a mit Verzahnungsbereichen 201a und 202a vorgesehen, die in einem ersten Lagerpunkt 203a mit einer Halteplatte 3a und in einem zweiten Lagerpunkt 204a mit einem Antriebshebel 1a verbunden ist. Auf der Halteplatte 3a ist symmetrisch zur Antriebsachse 6 eine Drehfeder 16 mit zwei Federenden 16a, 16b vorgesehen, die an einem Zapfen 302a der Halteplatte 3a anliegen.

Gemäß Figur 3 greift eine Lasche 701a des in den Figuren 4a und 4b nicht dargestellten Abdeckblechs 7a zwischen die beiden Federenden 16a, 16b und stellt dabei einen gehäusefesten Anschlag zur Verfügung. Der Antriebshebel ist im vorliegenden Ausführungsbeispiel zweigeteilt und besteht aus einer Hebelhalteplatte 1a und einem Betätigungshebel 1b, die fest miteinander verbunden und beidseitig des Abdeckblechs 7a angeordnet sind und die sich beide an diesem abstützen.

Die Hebelhalteplatte la bildet gemäß Fig. 3 eine Rückhollasche 101a aus, die mit dem einen Federende der Rückholfeder 15a, wie in bezug auf Figuren 1 und 2 beschrieben, in Eingriff steht.

Bei einem Verschwenken des Betätigungshebels 1b bzw. der Hebelhalteplatte 1a aus der Nullpunktlage wird der Lagerpunkt 204a zwischen Hebelhalteplatte 1a und Wippe 2a mitgedreht. Da die Wippe 2a ebenfalls im Lagerpunkt 203a von Wippe 2a und Halteplatte 3a gelagert ist, greift bei einer Auslenkung des Antriebshebels 1a auch ein Drehmoment an der Halteplatte 3a an. Einer Drehung der Halteplatte 3a wirkt jedoch die Drehfeder 16 entgegen, die sich zum einen am Zapfen 302a der Halteplatte 3a und zum anderen an der Lasche 701 der Abdeckplatte 7 abstützt.

Aufgrund dieser Federkraft wirkt bei einer Drehung der Halteplatte 3a aus der Nullstellung heraus ein rückstellendes Drehmoment auf die Halteplatte 3a, so daß diese bestrebt ist, in der Nullstellung zu verweilen. Die Drehfeder 16 erzeugt dabei das erforderliche Gegenmoment, das zu einem sicheren Verkippen und Einrasten der Wippe 2a in die Verzahnung 401a des Antriebsrades 4a sorgt. Da der Zapfen 301a bestrebt ist, in der Nullstellung zu verharren und sich einer Drehung widersetzt, wird die Wippe 2a sicher verkippt.

Des weiteren sorgt die Drehfeder 16 dafür, das die Halteplatte 3a bei Rückschwenken des Antriebshebels 1a, 1b in die Nullpunktlage ebenfalls definiert und mit geringem Spiel in die Nullstellung zurückkehrt, so daß bei einer erneuten Betätigung des Antriebshebels 1a, 1b die Wippe 2a sogleich erneut verkippt und mit minimalem Leerlauf eine weitere Drehbewegung auf das Antriebsrad 4a übertragen wird.

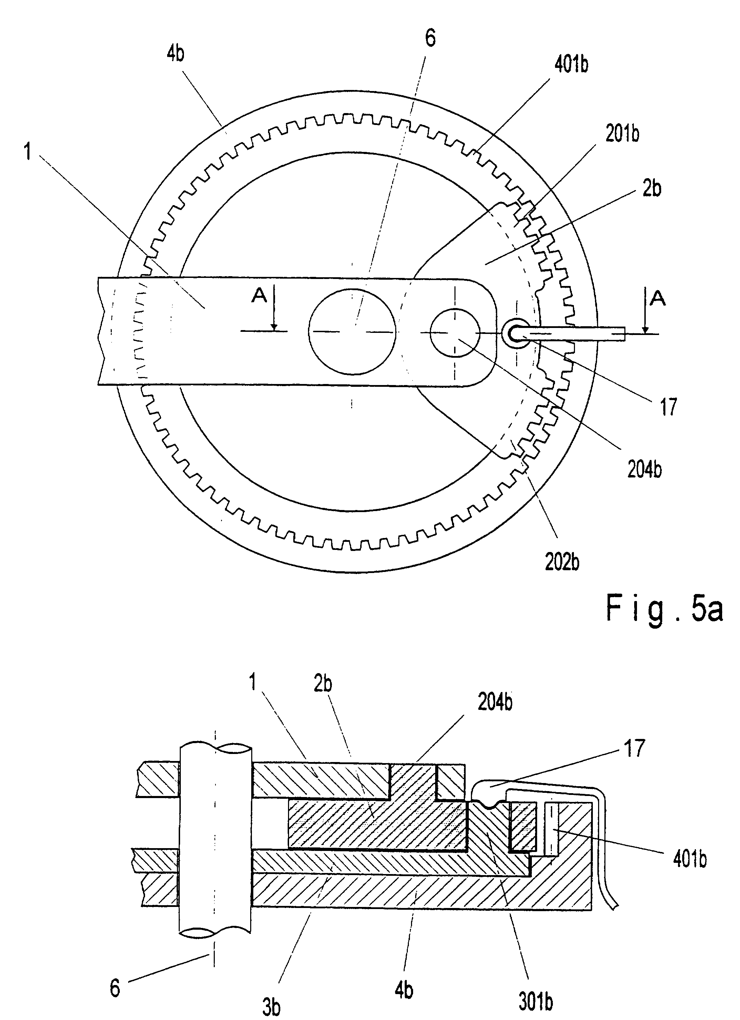

In den Figuren 5a und 5b ist eine weitere Variante eines erfindungsgemäßen Antriebes dargestellt. Die Figuren zeigen einen Antriebshebel 1, der auf einer Antriebsachse 6 gelagert ist. Der Antriebshebel 1 ist in einem ersten Lagerpunkt 204b mit einer Wippe 2b verbunden. Die Wippe 2b weist wiederum Verzahnungsbereiche 201b, 202b auf, die in Eingriff mit einer Innenverzahnung 401b eines Antriebsrades 4b bringbar sind. Ein zweiter Lagerpunkt der Wippe 2b wird durch einen Zapfen 301b einer Halteplatte 3b ausgebildet, der in ein entsprechendes Loch, insbesondere Langloch der Wippe 2b greift.

Die Besonderheit bei dieser Ausführungsform liegt darin, daß eine Rastfeder 17 eine axiale Kraft auf den Zapfen 301b der Halteplatte 3b ausübt. Die damit verbundenen Reibungskräfte wirken initial einer Drehung der Halteplatte 3b entgegen, wobei das damit verbundene Bremsmoment zu einem sicheren Verkippen und Einrasten der Wippe 2b führt. Es wird hier jedoch nur in der Nullstellung der Halteplatte 3b ein definiertes Bremsmoment erzeugt, um ein Einrasten der Wippe 2b sicherzustellen. Nachdem die Halteplatte 3b im Laufe der Schwenkbewegung des Antriebshebels 1 ebenfalls verdreht ist, ratscht die Rastfeder 17 über die Wippe 2b hinweg.

Es wird darauf hingewiesen, daß am Zapfen 301b der Halteplatte eine kleine Rastmulde ausgebildet ist, in die die Rastfeder 17 einrastet. Dies dient einem definierten Rückführen der Halteplatte 3b in die Nullstellung und minimiert ein möglicherweise vorhandenes Spiel. Hierdurch wird sichergestellt, daß die Wippe 2b bei einer erneuten Schwenkbewegung des Antriebshebels 1 aus der Nullpunktlage heraus sofort verkippt wird, so daß unmittelbar und ohne Leerlauf ein Eingriff der Verzahnungen von Wippe 2b und Antriebsrad 4b zur Übertragung einer Drehbewegung erfolgt. Dadurch wird auch sichergestellt, daß vor einem Eingriff der Verzahnungen von Wippe 2b und Antriebsrad 4b kein Ratschengeräusch entsteht.

In einem weiteren, nicht dargestellten Ausführungsbeispiel ist die Rückstellfeder 15 bzw. 15a der Figuren 1 bis 4b nicht am Umfang des Bremsgehäuses gelagert, sondern in den Bauraum zwischen Antriebsrad und Antriebshebel integriert. Als gehäuseseitiger Anschlag dient dabei beispielsweise eine in den Bauraum ragende gehäusefeste Lasche des Abdeckblechs entsprechend der Lasche 701 der Figur 3. Durch Integration der Rückstellfeder für den Antriebshebel in den Bauraum zwischen Antriebsrad und Antriebshebel wird die Kompaktheit des Antriebs weiter erhöht.

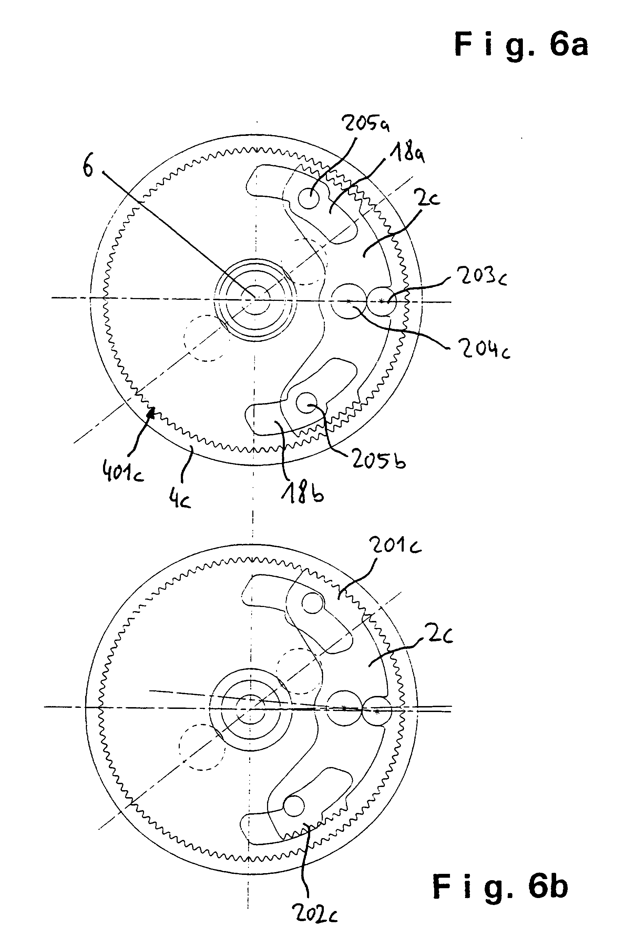

In den Figuren 6a bis 6f ist eine Ausbildung eines Antriebs gemäß den Figuren 1 und 2 dargestellt, der ohne eine Drehfeder oder ein Rastelement auskommt. Stattdessen ist eine Kulissenführung für die Wippe vorgesehen. Die Figuren 6a bis 6f zeigen ein Antriebsrad 4c mit einer Innenverzahnung 401c, eine Wippe 2c mit zwei Lagerpunkte 203c, 204c, eine Antriebsachse 6 sowie zwei Kulissen 18a, 18b, in die kreisförmige Nocken 205a, 205b der Wippe 2c eingreifen. Die Kulissen 18a, 18b ist dabei im Abdeckblech des Antriebs ausgebildet.

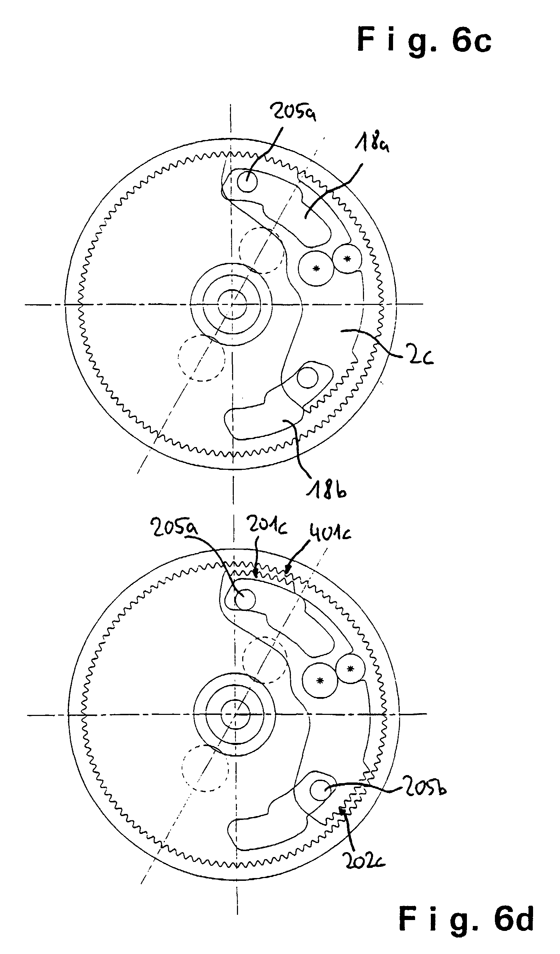

Wie anhand der Figuren 6a bis 6f dargestellt, wird die Wippe 2c durch die Kulissenführung während eines Schwenkvorgangs des Antriebshebels definiert und formschlüssig geführt. Insbesondere wird die Wippe 2c bei Rückführen des Antriebshebels in die Nullpunktlage definiert und mit minimalem Spiel zurückgeführt. Bei einer Verstellung des Antriebshebels aus der Nullpunktlage verkippt zunächst die Wippe 3c, wobei der eine Verzahnungsbereich 201c mit der Innenverzahnung 401c des Antriebsrades 4c in Eingriff gerät (Figur 6b). Nach Durchlaufen der maximalen Schwenkbewegung des Antriebshebels (Figur 6c) wird der Antriebshebel losgelassen und kehrt aufgrund des Drehmomentes der (nicht dargestellten) Rückstellfeder in seine Nullpunktlage zurück.

Bei Reversierung der Schwenkbewegung des Antriebshebels gerät der Verzahnungsbereich 201c außer Eingriff mit der Verzahnung 401c (Figur 6d). Durch die gegenüberliegende Kulisse 18b wird dabei verhindert, daß nun die bisher außer Eingriff gestandene Verzahnung 202c mit der Innenverzahnung 401c des Antriebsrades 4c in Eingriff gerät. Dies muß selbstverständlich verhindert werden, um ein sicheres und geräuscharmes Rückführen des Antriebshebels und der damit verbundenen Wippe 2c zu gewährleisten und insbesondere eine Umkehrbewegung des Antriebsrades bis zum Erreichen der Nullpunktlage zu verhindern.

Am Ende der Rückstellbewegung wird die ursprüngliche Nullstellung aufgrund eines vorhandenen Spiels nicht ganz erreicht. Das Spiel ist jedoch gering, da in den Kulissen 18a, 18b jeweils Knickbereiche 181 vorgesehen sind, an deren einen Flanke die Nocken 205a, 205b in der Nullpunktlage jeweils anliegen, wodurch eine gewisse Zentrierung erreicht wird.

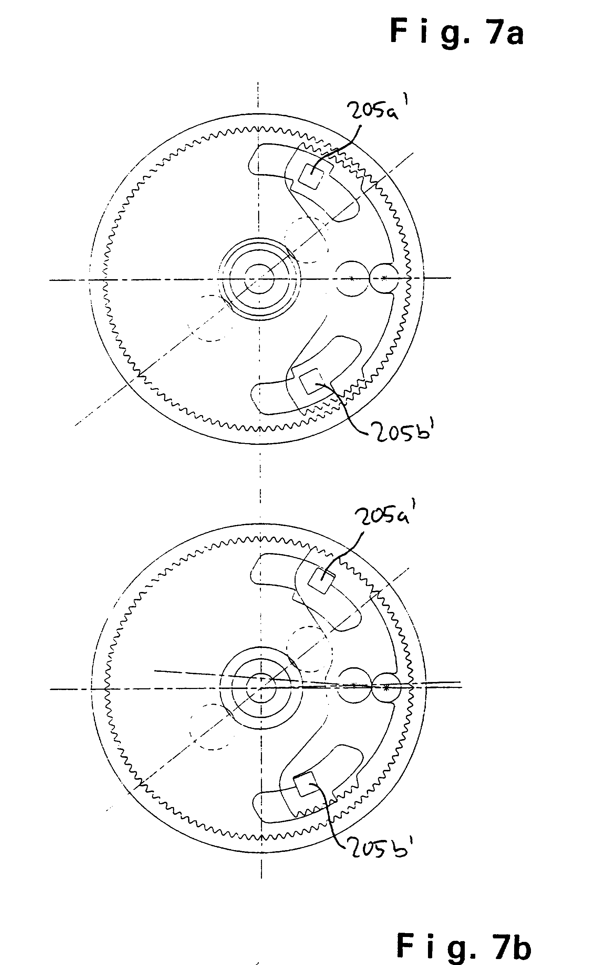

In Figuren 7a bis 7f ist ein entsprechender Verstellverlauf eines weiteren Verstellantriebs dargestellt, der sich von dem Verstellantrieb der Figuren 6a bis 6f lediglich dadurch unterscheidet, daß der jeweilige Nocken 205a', 205b' rechteckig ausgebildet ist und die Knickbereiche 118' der Kulissen 18a, 18b dementsprechend ebenfalls im wesentlichen rechtwinklig ausgebildet sind. Hierdurch wird die Nullstellung bei einer Rückstellbewegung später erreicht, so daß ein geringerer Leerlauf am Antriebshebel entsteht. Bei eckigen Nocken 205a' ist das Spiel somit kleiner als bei runden Nocken 205a. Die Nullstellung wird damit mit einer hohen Auflösung definiert.

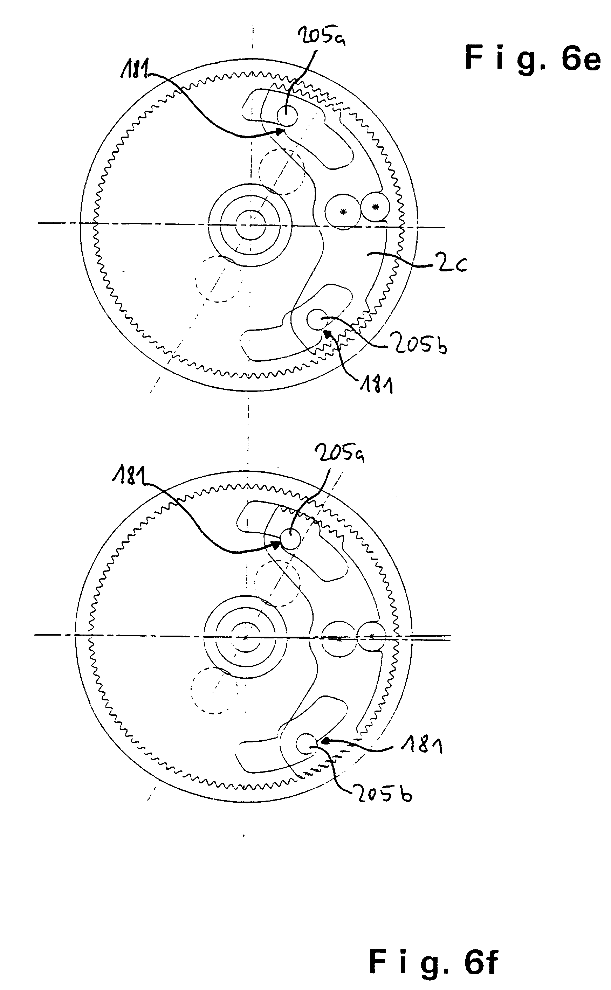

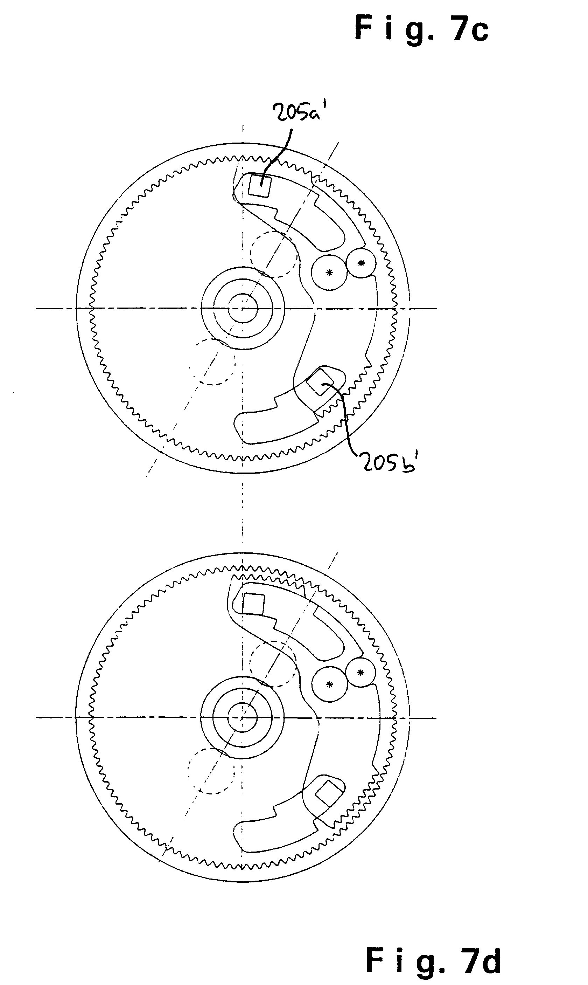

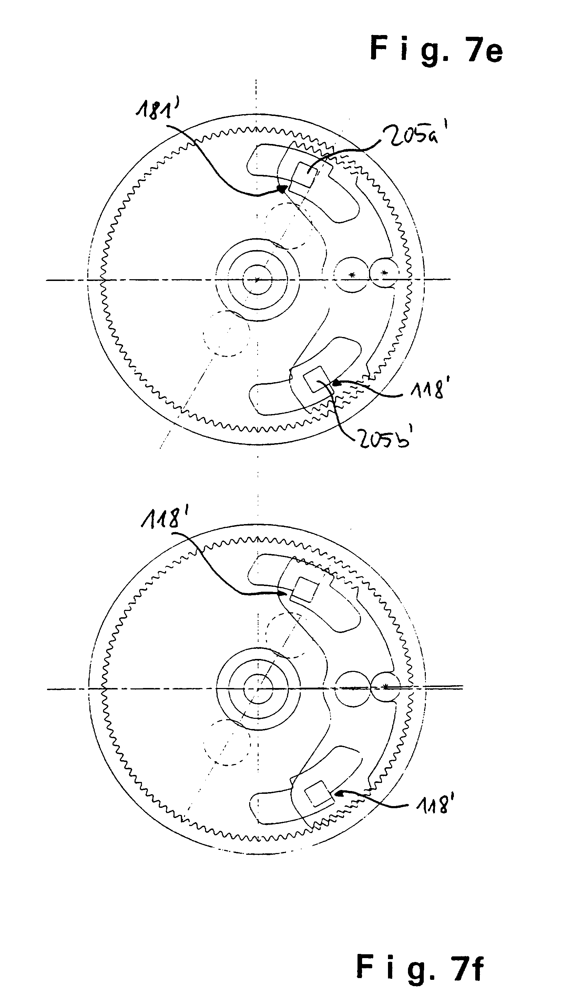

Es wird darauf hingewiesen, daß es im Rahmen der Erfindung liegt, auch bei den Ausführungsbeispielen der Figuren 1 bis 4a zusätzlich eine Kulissenführung gemäß den Figuren 6 und 7 vorzusehen.

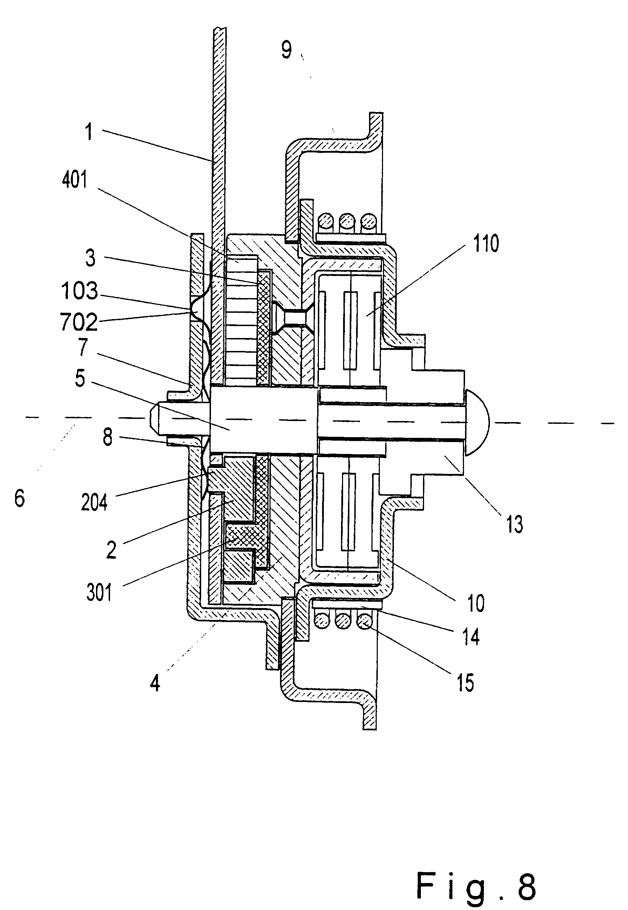

In Figur 8 ist ein weiteres Ausführungsbeispiel eines Verstellantriebs dargestellt, das im wesentlichen dem Ausführungsbeispiel der Figuren 1 und 2 entspricht. Dabei ist am Antriebshebel 1 eine federnde Lasche 103 ausgebildet, die in der Nullpunktlage des Antriebshebels 1 in eine Rastöffnung 702 des Abdeckblechs 7 einrastet. Hierdurch wird eine definierte Nullpunktlage des Antriebshebels 1 festgelegt und ein Leerlauf des Hebels bei Beginn einer Schwenkbewegung weiter minimiert.

Die Erfindung ist in ihrer Anwendung nicht auf die vorgenannten Ausführungsbeispiele begrenzt. Wesentlich für die Erfindung ist allein, daß eine Drehmomentübertragung auf das Antriebsrad durch ein Verriegelungselement erfolgt, das als schwenkbares Kippelement ausgebildet ist.

## Patentansprüche

1. Beidseitig wirkender Antrieb zur Erzeugung einer Drehbewegung, insbesondere für eine manuelle Höhen- oder Neigungsverstellung eines Fahrzeugsitzes, die wahlweise ausgehend von einer Nullpunkt-Lage eines Antriebshebels (1, 1a) in die eine oder andere Antriebsrichtung erfolgt, wobei ein anzutreibendes Element nur dann gedreht wird, wenn sich der Antriebshebel (1, 1a) von der Nullpunkt-Lage weg bewegt, während bei einer Bewegung des Antriebshebels (1, la) in Richtung der Nullpunkt-Lage das anzutreibende Element nicht mitgenommen wird, wobei
a) der Antriebshebel (1, 1a) um eine Antriebsachse (6) schwenkbar und mit Verriegelungsmitteln (2, 2a, 2b, 2c) gekoppelt ist, die mit einer auf dem Umfang eines Antriebsrades (4, 4a, 4b, 4c) angeordneten Verzahnung (401, 401a, 401b, 401c) in Eingriff bringbar sind und
b) das Antriebsrad (4, 4a, 4b, 4c) mit dem anzutreibenden Element verbunden ist oder dieses darstellt,
**dadurch gekennzeichnet,**
daß die Verriegelungsmittel ein einteiliges Kippelement (2, 2a, 2b, 2c) aufweisen, das in Abhängigkeit von der jeweiligen Antriebsrichtung zwischen zwei Endpositionen hin und her kippt, wobei in jeder Endposition zur Übertragung einer Antriebskraft eine Verriegelung des Kippelements (2, 2a, 2b, 2c) mit der Verzahnung (401, 401a, 401b, 401c) des Antriebsrades (4, 4a, 4b, 4c) erfolgt.

2. Beidseitig wirkender Antrieb nach Anspruch 1, **dadurch gekennzeichnet,** daß das Kippelement (2, 2a, 2b, 2c) kippbar an zwei radial beabstandeten Lagerpunkten des Antriebs gelagert ist.

3. Beidseitig wirkender Antrieb nach Anspruch 2, **dadurch gekennzeichnet,** daß die beiden radial beabstandeten Lagerpunkte an zwei Antriebsteilen (1, 1a; 3, 3a, 3b) ausgebildet sind, die unabhängig voneinander um die Antriebsachse (6) verschwenkbar sind.

4. Beidseitig wirkender Antrieb nach Anspruch 3, **dadurch gekennzeichnet,** das der eine Lagerpunkt (204, 204a, 204b, 204c) am Antriebshebel (1, 1a) und der andere Lagerpunkt (203, 203a, 203c) an einer Halteplatte (3, 3a, 3b) ausgebildet ist, wobei der Antriebshebel (1, 1a) und die Halteplatte (3, 3a, 3b) über das Kippelement (2, 2a, 2b, 2c) miteinander gekoppelt sind.

5. Beidseitig wirkender Antrieb nach Anspruch 4, **dadurch gekennzeichnet,** daß der am Antriebshebel (1, la) ausgebildete Lagerpunkt (204, 204a, 204b, 204c) einen geringeren radialen Abstand zur Antriebsachse (6) aufweist als der an der Halteplatte (3, 3a, 3b) ausgebildete Lagerpunkt (203, 203a, 203c) .

6. Beidseitig wirkender Antrieb nach mindestens einem der vorangehenden Ansprüche, **dadurch gekennzeichnet,** daß das Kippelement eine Wippe (2, 2a, 2b, 2c) ist, die zwei auf einem Kreisumfang angeordnete, beabstandete Verzahnungsbereiche (201, 201a, 201b, 201c; 202, 202a, 202b, 202c) aufweist, wobei in jeder Endposition der Wippe einer der Verzahnungsbereiche mit der Verzahnung des Antriebsrades (4, 4a, 4b, 4c) in Eingriff steht.

7. Beidseitig wirkender Antrieb nach Anspruch 6, **dadurch gekennzeichnet,** daß die Verzahnungsbereiche der Wippe (2, 2a, 2b, 2c) sowie die Verzahnung des Antriebsrades (4, 4a, 4b, 4c) eben ausgebildet sind und die jeweiligen Oberflächen einen hohen Reibungskoeffizienten aufweisen, wobei eine Verriegelung der Wippe mit dem Antriebsrad über einen Reibschluß erfolgt.

8. Beidseitig wirkender Antrieb nach Anspruch 6 oder 7, **dadurch gekennzeichnet,** daß die Wippe (2, 2a, 2b, 2c) achsensymmetrisch aufgebaut ist und die beiden Lagerpunkte der Wippe (2, 2a, 2b, 2c) auf der Symmetrieachse liegen.

9. Beidseitig wirkender Antrieb nach Anspruch 6 oder 7, **dadurch gekennzeichnet,** daß die Wippe (2, 2a, 2b, 2c) asymmetrisch aufgebaut ist, wobei den beiden Antriebsrichtungen des Antriebshebels ein unterschiedlicher Hub zugeordnet ist.

10. Beidseitig wirkender Antrieb nach mindestens einem der Ansprüche 4 bis 9, **dadurch gekennzeichnet,** daß Mittel (16, 17) vorgesehen sind, die bei einer Schwenkbewegung des Antriebshebels (1, 1a) aus der Nullpunkt-Lage heraus einer entsprechenden Drehung der Halteplatte aus deren Nullstellung entgegenwirken.

11. Beidseitig wirkender Antrieb nach Anspruch 10, **dadurch gekennzeichnet,** daß eine Drehfeder (16) vorgesehen ist, die an der Halteplatte (3a) fixiert ist, wobei die Drehfeder (16) bei einer Drehung der Halteplatte (3a) aus der Nullstellung heraus ein rückstellendes Drehoment auf die Halteplatte (3a) in Richtung der Nullstellung ausübt.

12. Beidseitig wirkender Antrieb nach Anspruch 10, **dadurch gekennzeichnet,** das der Halteplatte ein Rastelement, insbesondere eine Rastkugel zugeordnet ist, in das die Halteplatte in der Nullstellung lösbar einrastet.

13. Beidseitig wirkender Antrieb nach Anspruch 10 oder 12, **dadurch gekennzeichnet,** daß die Halteplatte (3b) mit einer Rastfeder (17) gekoppelt ist, die zumindest in der Nullstellung der Halteplatte (3b) eine axiale Kraft auf die Halteplatte (3b) ausübt und durch ein damit verbundenes Bremsmoment einem Herausdrehen der Halteplatte (3b) aus der Nullstellung entgegenwirkt.

14. Beidseitig wirkender Antrieb nach Anspruch 13, **dadurch gekennzeichnet,** das die Rastfeder (17) eine axiale Kraft auf einen Zapfen (301b) der Halteplatte (3b) ausübt, der zur Ausbildung eines Lagers in ein Loch des Klemmelements (2b) eingreift.

15. Beidseitig wirkender Antrieb nach mindestens einem der vorangehenden Ansprüche, **dadurch gekennzeichnet,** daß dem Kippelement (2c) eine Kulissenführung (18a, 18b) zugeordnet ist, die das Kippelement (2c) während einer Betätung des Antriebshebels auf einer definierten Bahn führt und ein Rückstellen des Kippelements (2c) bei einem Rückführen des Antriebshebels in die Nullpunkt-Stellung sicherstellt, ohne daß dabei eine Rückstellung des Antriebsrades erfolgt.

16. Beidseitig wirkender Antrieb nach Anspruch 15, **dadurch gekennzeichnet,** das die Kulisse (18a, 18b) in einem Abdeckblech des Antriebs ausgebildet ist, das sich antriebsseitig an den Antriebshebel anschließt.

17. Beidseitig wirkender Antrieb nach Anspruch 15 oder 16, **dadurch gekennzeichnet**, das das Kippelement (2c) mindestens zwei symmetrisch angeordnete Nocken oder Bolzen (205a, 205b) aufweist, die in der Kulissenführung (18a, 18b) geführt werden.

18. Beidseitig wirkender Antrieb nach mindestens einem der vorangehenden Ansprüche, **dadurch gekennzeichnet,** daß der Antrieb eine Bremsvorrichtung (11) enthält, die derart ausgebildet ist, daß eine abtriebsseitige Drehmomentübertragung gesperrt, eine antriebsseitige Drehmomentübertragung dagegen möglich ist.

19. Beidseitig wirkender Antrieb nach mindestens einem der vorangehenden Ansprüche, **dadurch gekennzeichnet,** daß eine Rückholfeder (15) zum Rückholen des Antriebshebels (1) in seine Nullpunkt-Lage vorgesehen ist, die zum einen mit einem gehäusefesten Gehäuseanschlag (92) und zum anderen einem mit einem Anschlag (101) des Antriebshebels (1) gekoppelt ist.

20. Beidseitig wirkender Antrieb nach Anspruch 19, **dadurch gekennzeichnet,** daß die Rückholfeder in dem sich an den Antriebshebel (1) anschließenden Bauraum, insbesondere innerhalb des Antriebsrades (4) angeordnet ist.

21. Beidseitig wirkender Antrieb nach mindestens einem der vorangehenden Ansprüche, **dadurch gekennzeichnet,** daß das Antriebsrad (4, 4a, 4b, 4c) selbst das anzutreibende Element darstellt, wobei das Antriebsrad (4, 4a, 4b, 4c) eine durch den Antrieb erzeugte Drehbewegung auf abtriebsseitig angeordnete Abtriebsmittel (13) überträgt.

22. Beidseitig wirkender Antrieb nach mindestens einem der Ansprüche 1 bis 19, **dadurch gekennzeichnet,** daß das anzutreibende Element eine Antriebswelle ist, mit der das Antriebsrad drehfest verbunden sind, wobei das Antriebsrad eine durch den Antrieb erzeugte Drehbewegung auf die Antriebswelle überträgt.

23. Beidseitig wirkender Antrieb nach mindestens einem der vorangehenden Ansprüche, **dadurch gekennzeichnet**, daß das Kippelement (2, 2a, 2b, 2c) als Sinterteil oder als Kunststoffteil ausgebildet ist.

24. Beidseitig wirkender Antrieb nach mindestens einem der vorangehenden Ansprüche, **dadurch gekennzeichnet,** daß die Halteplatte (3, 3a, 3b) aus Kunststoff besteht.

25. Beidseitig wirkender Antrieb nach mindestens einem der vorangehenden Ansprüche, **dadurch gekennzeichnet,** daß die Verzahnung des Antriebsrads (4, 4a, 4b, 4c) eine Innnenverzahnung (401, 401a, 401b, 401c) ist.

## Claims

1. Drive acting on both sides for producing a rotary movement, more particularly for a manual height or incline adjustment of a vehicle seat, which takes place selectively starting from a neutral position of a drive lever (1,1A) into one or other drive direction wherein an element to be driven is only turned when the drive lever (1, 1a) is moved away from the neutral position whilst with a movement of the drive lever (1,1a) into the direction of the neutral position the element to be driven is not entrained, whereby
a) the drive lever (1,1a) can swivel about a drive axis (6) and is coupled to locking means (2, 2a, 2b 2c) which can be brought into engagement with teeth (401, 401a, 401b, 401c) mounted on the circumference of a drive wheel (4, 4a, 4b, 4c) and
b) the drive wheel (4, 4a, 4b, 4c) is connected to the element to be driven or represents same,
**characterised in that**
the locking means have a one-piece tilt element (2, 2a, 2b, 2c) which tilts to and fro between two end positions in dependence on the relevant drive direction wherein in each end position a locking of the tilt element (2, 2a, 2b, 2c) takes place with the teeth (401, 401a, 401b, 401c) of the drive wheel (4, 4a, 4b, 4c).

2. Drive acting on both sides according to claim 1, **characterised in that** the tilt element (2, 2a, 2b, 2c) is mounted to tilt on two radially spaced bearing points of the drive.

3. Drive acting on both sides according to claim 2 **characterised in that** the two radially spaced bearing points are formed on two drive parts (1, 1a; 3, 3a, 3b) which can swivel independently of each other about the drive axis (6).

4. Drive acting on both sides according to claim 3 **characterised in that** the one bearing point (204, 204a, 204b, 204c) is formed on the drive lever (1, 1a) and the other bearing point (203, 203a, 203c) is formed on the holding plate (3, 3a, 3b) wherein the drive lever (1, 1a) and the holding plate (3, 3a, 3b) are coupled together by the tilt element (2, 2a, 2b, 2c).

5. Drive acting on both sides according to claim 4 **characterised in that** the bearing point (204, 204a, 204b, 204c) formed on the drive lever (1, 1a) has a smaller radial distance from the drive axis (6) than the bearing point (203, 203a, 203c) formed on the holding plate (3, 3a, 3b).

6. Drive acting on both sides according to at least one of the preceding claims **characterised in that** the tilt element is a rocker arm (2, 2a, 2b, 2c) which has two toothed areas (201, 201a, 201b, 201c; 202, 202a, 202b, 202c) arranged spaced out on a circular circumference wherein in each end position of the rocker arm one of the toothed areas engages with the toothed area of the drive wheel (4, 4a, 4b, 4c).

7. Drive acting on both sides according to claim 6 **characterised in that** the toothed areas of the rocker arm (2, 2a, 2b, 2c) as well as the teeth of the drive wheel (4, 4a, 4b, 4c) are formed flat and the relevant surfaces have a high coefficient of friction wherein locking of the rocker arm with the drive wheel is produced through friction engagement.

8. Drive acting on both sides according to claim 6 or 7 **characterised in that** the rocker arm (2, 2a, 2b, 2c) is constructed axially symmetrical and the two bearing points of the rocker arm (2, 2a, 2b, 2c) lie on the axis of symmetry.

9. Drive acting on both sides according to claim 6 or 7 **characterised in that** the rocker arm (2, 2a, 2b, 2c) is constructed asymmetrical wherein a different stroke is allocated to the two drive directions of the drive lever.

10. Drive acting on both sides according to at least one of claims 4 to 9 **characterised in that** means (16, 17) are provided which with a swivel movement of the drive lever (1, 1a) out of the neutral position counteract a corresponding rotation of the holding plate out of its neutral position.

11. Drive acting on both sides according to claim 10 **characterised in that** a rotary spring (16) is provided which is fixed on the holding plate (3a) wherein the rotary spring (16) during rotation of the holding plate (3a) out of the neutral position exerts a resetting torque on the holding plate (3a) in the direction of the neutral position.

12. Drive acting on both sides according to claim 10 **characterised in that** the holding plate is associated with a detent element, more particularly a detent ball in which the holding plate detachably catches in the neutral position.

13. Drive acting on both sides according to claim 10 or 12 **characterised in that** the holding plate (3b) is coupled to a detent spring (17) which at least when the holding plate (3b) is in the neutral position exerts an axial force on the holding plate (3b) and through a braking moment connected therewith counteracts the holding plate (3b) turning out of the neutral position.

14. Drive acting on both sides according to claim 13 **characterised in that** the detent spring (17) exerts an axial force on a stud (301b) of the holding plate (3b) which to form a bearing engages in a hole of the clamping element (2b).

15. Drive acting on both sides according to at least one of the preceding claims, **characterised in that** the tilt element (2c) is associated with a slide guide (18a, 18b) which when the drive lever is activated guides the tilt element (2c) on a defined path and ensures the tilt element (2c) is reset when the drive lever is returned to the neutral position without resetting of the drive wheel taking place.

16. Drive acting on both sides according to claim 15 **characterised in that** the slide guide (18a,18b) is formed in a cover plate of the drive which on the drive side adjoins the drive lever.

17. Drive acting on both sides according to claim 15 or 16 **characterised in that** the tilt element (2c) has at least two cams or bolts (205a, 205b) arranged symmetrically and guided in the slide guide (18a, 18b).

18. Drive acting on both sides according to at least one of the preceding claims **characterised in that** the drive contains a brake device (11) which is formed so that a torque transfer on the output side is blocked whilst a torque transfer on the drive side is possible.

19. Drive acting on both sides **characterised in that** a return spring (15) for returning the drive lever (1) into its neutral position is provided which is coupled on the one hand to a housing stop (92) fixed on the housing and on the other hand to a stop (101) of the drive lever (1).

20. Drive acting on both sides according to claim 19 **characterised in that** the return spring is mounted in the structural space adjoining the drive lever (1) more particularly inside the drive wheel (4).

21. Drive acting on both sides according to at least one of the preceding claims **characterised in that** the drive wheel (4, 4a, 4b, ,4c) itself forms the element to be driven wherein the drive wheel (4, 4a, 4b, 4c) transfers a rotary movement produced by the drive to driven means (13) mounted on the output side.

22. Drive acting on both sides according to at least one of claims 1 to 19 **characterised in that** the element to be driven is a drive shaft to which the drive wheel is connected rotationally secured whereby the drive wheel transfers a rotary movement produced by the drive to the drive shaft.

23. Drive acting on both sides according to at least one of the preceding claims **characterised in that** the tilt element (2, 2a, 2b, 2c) is formed as a sintered part or as a plastics part.

24. Drive acting on both sides according to at least one of the preceding claims **characterised in that** the holding plate (3, 3a, 3b) consists of plastics.

25. Drive acting on both sides according to at least one of the preceding claims, **characterised in that** the teeth of the drive wheel (4, 4a, 4b, 4c) are internal teeth (401, 401a, 401b, 401c).

## Revendications

1. Mécanisme de commande agissant sur deux côtés pour la production d'un mouvement rotatif, en particulier pour un réglage manuel en hauteur et en inclinaison d'un siège de véhicule qui, sélectivement, en partant d'une position de point zéro d'un levier de commande (1,1a), s'effectue dans l'une ou dans l'autre direction de commande, un élément à commander n'étant alors mis en rotation que lorsque le levier de commande (1,1a) s'éloigne de la position de point zéro, tandis que pour un mouvement du levier de commande (1,1a) dans la direction de la position de point zéro l'élément de commande n'est pas entraîné,
a) le levier de commande (1,1a) pouvant basculer autour d'un axe de commande (6) et étant accouplé à des moyens de verrouillage (2,2a,2b,2c) et pouvant être mis en prise avec une denture (401,401A,401b,401c) disposée sur la périphérie d'une roue de commande (4,4a,4bb,4c) et
b) la roue de commande (4,4a,4b,4c) étant raccordée avec l'élément à commander ou représentant celui-ci,
caractérisé en ce que
les moyens de verrouillage présentent un élément de basculement d'une seule pièce 2,2a,2b,2c) qui, en fonction de la direction de commande respective, bascule entre deux positions d'extrémité, moyennant quoi dans chaque position d'extrémité, un verrouillage de l'élément de basculement (2,2a,2b,2c) s'effectue avec la denture(401,401a,401b,401c) de la roue de commande (4,4a,4a,4b,4c) pour la transmission d'une force de commande.

2. Mécanisme de commande agissant sur deux côtés selon la revendication 1, caractérisé en ce que l'élément de basculement (2,2a,2b,2c) est monté de façon basculante sur deux points de palier du mécanisme de commande distancés radialement entre eux.

3. Mécanisme de commande agissant sur deux côtés selon la revendication 2, caractérisé en ce que les deux points de palier distancés radialement entre eux sont formés sur deux parties de commande (1,1a;3,3a,3b) qui peuvent basculer indépendamment l'une de l'autre autour de l'axe de commande (6).

4. Mécanisme de commande agissant sur deux côtés selon la revendication 3, caractérisé en ce qu'un point de palier (204,204a,204b,204c) est formé sur le levier de commande (1,1a) et l'autre point de palier (203,203a,203c) est formé sur une plaque de retenue (3,3a,3b), le levier de commande (1,1a) et la plaque de retenue (3,3a,3b) étant accouplés entre eux par l'intermédiaire de l'élément de basculement (2,2a,2b,2c).

5. Mécanisme de commande agissant sur deux côtés selon la revendication 4, caractérisé en ce que le point de palier (104,204a,204b,204c) formé sur le levier de commande (1,1a) présente une distance radiale moindre par rapport à l'axe de commande (6) que le point de palier (203,203a,203c) formé sur la plaque de retenue (3,3a,3b).

6. Mécanisme de commande agissant sur deux côtés selon au moins l'une des revendications précédentes, caractérisé en ce que l'élément de basculement est un culbuteur (2,2a,2b,2c) qui présente deux zones de denture (201,201a,201b,201c;202,202a,202b,202c) disposées sur une périphérie circulaire, dans chaque position d'extrémité du culbuteur l'une des zones de denture venant en prise avec la denture de la roue de commande (4,4a,4b,4c).

7. Mécanisme de commande agissant sur deux côtés selon la revendication 6, caractérisé en ce que les zones de denture du culbuteur (2,2a,2b,2c) ainsi que la denture de la roue de commande (4,4a,4b,4c) sont formées de façon plane et les différentes surfaces présentent un coefficient de friction élevé, un verrouillage du culbuteur avec la roue de commande s'effectuant par friction.

8. Mécanisme de commande agissant sur deux côtés selon la revendication 6 ou 7, caractérisé en ce que le culbuteur (2,2a,2b,2c) est conçu de façon symétrique par rapport à l'axe et les deux points de palier du culbuteur (2,2a,2b,2c) se situant sur l'axe de symétrie.

9. Mécanisme de commande selon la revendication 6 ou 7, caractérisé en ce que le culbuteur (2,2a,2b,2c) est conçu de façon asymétrique, une course différentielle étant affectée aux deux directions de commande du levier de commande.

10. Mécanisme de commande agissant sur deux côtés selon au moins l'une des revendications 4 à 9, caractérisé en ce qu'il est prévu des moyens (16,17) qui, lors d'un mouvement de basculement du levier de commande (1,1a) hors de la position de point zéro, s'opposent à une rotation correspondante de la plaque de retenue hors de sa position zéro.

11. Mécanisme de commande agissant sur deux côtés selon la revendication 10, caractérisé en ce qu'il est prévu un ressort de rotation qui est fixé sur la plaque de retenue (3a),le ressort de rotation (16) exerçant un couple de rotation de rappel sur la plaque de retenue (3a) dans la direction de la position zéro lors d'une rotation de la plaque de retenue (3a) hors de la position zéro.

12. Mécanisme de commande agissant sur deux côtés selon la revendication 10, caractérisé en ce qu'un élément d'encliquetage, en particulier une bille d'encliquetage, est affecté à la plaque de retenue, élément d'encliquetage dans lequel vient s'encliqueter de façon amovible la plaque de retenue dans la position zéro.

13. Mécanisme de commande agissant sur deux côtés selon la revendication 10 ou 12, caractérisé en ce que la plaque de retenue (3b) est accouplée à un ressort à cran d'arrêt (17) qui, au moins dans la position zéro de la plaque de retenue (3b), exerce une force axiale sur la plaque de retenue (3b) et par un couple de freinage ainsi associé s'oppose à une rotation de sortie de la plaque de retenue (3b) hors de la position zéro.

14. Mécanisme de commande agissant sur deux côtés selon la revendication 13, caractérisé en ce que le ressort à cran d'arrêt (17) exerce une force sur un tourillon (301b) de la plaque de retenue (3b), lequel pour la formation d'un palier s'engage dans un trou de l'élément de serrage (2b).

15. Mécanisme de commande agissant sur deux côtés selon au moins l'une des revendications précédentes, caractérisé en ce qu'un guidage à coulisseau (18a,18b) est affecté à l'élément de basculement (2c), lequel guidage à coulisseau guide l'élément de basculement pendant un actionnement du levier de commande sur une voie définie et assure un rappel de l'élément de basculement (2c) lors d'un recul du levier de commande dans la position de point zéro sans occasionner ce faisant un retour de la roue de commande.

16. Mécanisme de commande selon la revendication 15, caractérisé en ce que le coulisseau (18a,18b) est formé dans une tôle de capotage du mécanisme de commande qui se raccorde au levier de commande sur le côté entraînement.

17. Mécanisme de commande agissant sur deux côtés selon la revendication 15 ou 16, caractérisé en ce que l'élément de basculement (2c) comporte au moins deux cames ou boulons (205a,205b) disposés symétriquement qui sont menés dans le guidage à coulisseau (18a,18b).

18. Mécanisme de commande agissant sur deux côtés selon au moins l'une des revendications précédentes, caractérisé en ce que le mécanisme de commande comprend un dispositif de freinage (11) qui est conçu de telle sorte à bloquer une transmission de couple de rotation sur le côté sortie et à permettre au contraire une transmission du couple de rotation sur le côté commande.

19. Mécanisme de commande agissant sur deux côtés selon au moins l'une des revendications précédentes, caractérisé en ce qu'il est prévu un ressort de rappel (15) pour le rappel du levier de commande (1) dans sa position de point zéro et qui est accouplé d'une part à une butée de logement (92), solidaire du logement, et d'autre part, à une butée (101) du levier de commande (1).

20. Mécanisme de commande agissant sur deux côtés selon la revendication 19, caractérisé en ce que le ressort de rappel est disposé dans l'espace contigu au levier de commande (1), en particulier à l'intérieur de la roue de commande (4).

21. Mécanisme de commande agissant sur deux côtés selon au moins d'une des revendications précédentes, caractérisé en ce que la roue de commande (4,4a,4b,4c) elle-même représente l'élément à entraîner, la roue de commande (4,4a,4b,4c) transmettant un mouvement de rotation produit par le mécanisme de commande au moyen de sortie (13) disposé sur le côté sortie.

22. Mécanisme de commande agissant sur deux côtés selon au moins l'une des revendications 1 à 19, caractérisé en ce que l'élément à entraîner est un arbre de commande avec lequel le roue de commande est raccordée de façon rigide en rotation, la roue de commande transmettant à l'arbre de commande un mouvement de rotation produit par le mécanisme de commande.

23. Mécanisme de commande agissant sur deux côtés selon au moins l'une des revendications précédentes, caractérisé en ce que l'élément de basculement (2,2a,2b,2c) est réalisé comme pièce en métal fritté ou comme pièce en matière synthétique.

24. Mécanisme de commande agissant sur deux côtés selon au moins l'une des revendications précédentes, caractérisé en ce que la plaque de retenue (3,3a,3b) est réalisée à partir d'une matière synthétique.

25. Mécanisme de commande agissant sur deux côtés selon au moins l'une des revendications précédentes, caractérisé en ce que la denture de la roue de commande (4,4a,4b,4c) est une denture intérieure (401,401a,401b,401c).
